# EUROPEAN PATENT APPLICATION

(11) **EP 1 712 165 A2**
(43) Date of publication of application: **18.10.2006**
(21) Application number: 06112206.5
(22) Date of filing: 04.04.2006
(51) Int. Cl.: A47H 23/08

(54) **Drape comprising a curtain made of optical fibres**

(30) Priority: 11.04.2005 IT FI20050065
(71) Applicant: Silvi, Silvia, 50122 Firenze (IT)
(72) Inventor: SILVI, Silvia, 50122, Firenze (IT); SILVI, Attilio, 50010, San Martino alla Palma (IT)
(74) Representative: Gervasi, Gemma

(57) **Abstract**

A drape comprising a conventional curtain (10) and a counter-curtain (11) made of optical fibres provided with suitable fastening means between curtain and counter-curtain.

## Description

### Field of the invention

The present invention relates to the field of furnishings, in particular drapes.

### Background art

In the field of furnishings, technological innovation plays an increasingly important role as interior designers and architects are constantly seeking solutions capable of satisfying the demands of the market which in this sector is particularly responsive to innovations and consequently eager to welcome new proposals.

In the field of furnishings in recent years optical fibres have often been used, which owing to their plurality of uses are suitable to be utilised, both for functional and for purely decorative purposes, in various articles (lamps, decorations, fabrics, etc.) and towards which the market has shown considerable interest.

New proposals providing useful objects for the furnishing sector and which utilise the aforesaid materials are therefore of particular interest.

### Brief description of the figures:

Figure 1 schematically represents a drape according to the invention.
Figure 2 schematically represents a detail of the invention (tape open).
Figure 3 represents a further particular embodiment of the invention.

### Detailed description of the invention

The present invention relates to a drape comprising a curtain and a counter-curtain composed of optical fibres arranged spaced along the surface of the curtain.

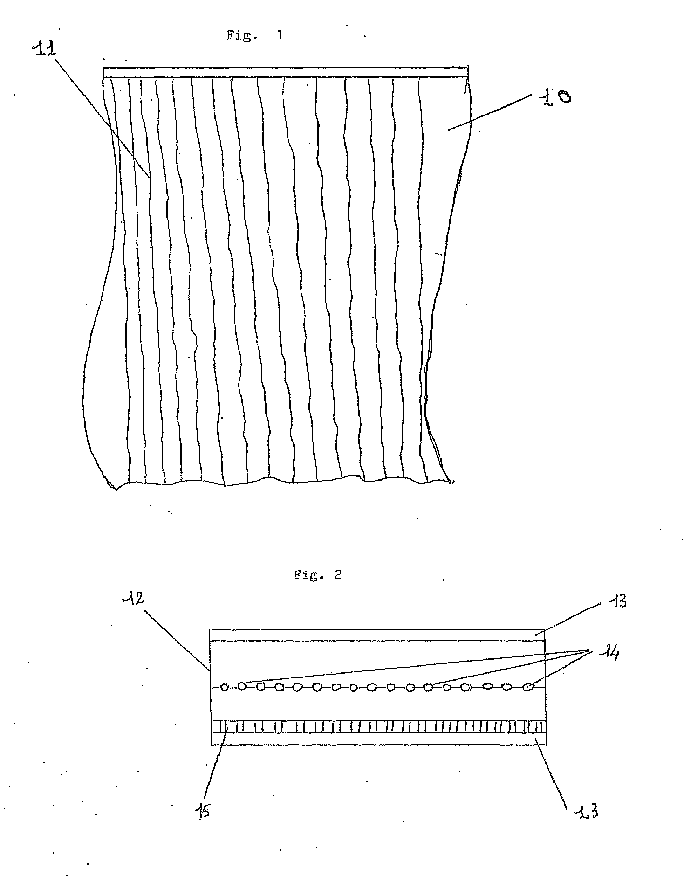

As can be seen from Figure 1, the curtain 10 and the counter-curtain 11 (which form the drape according to the invention) are joined to each other along the top edge thereof, in a removable way.

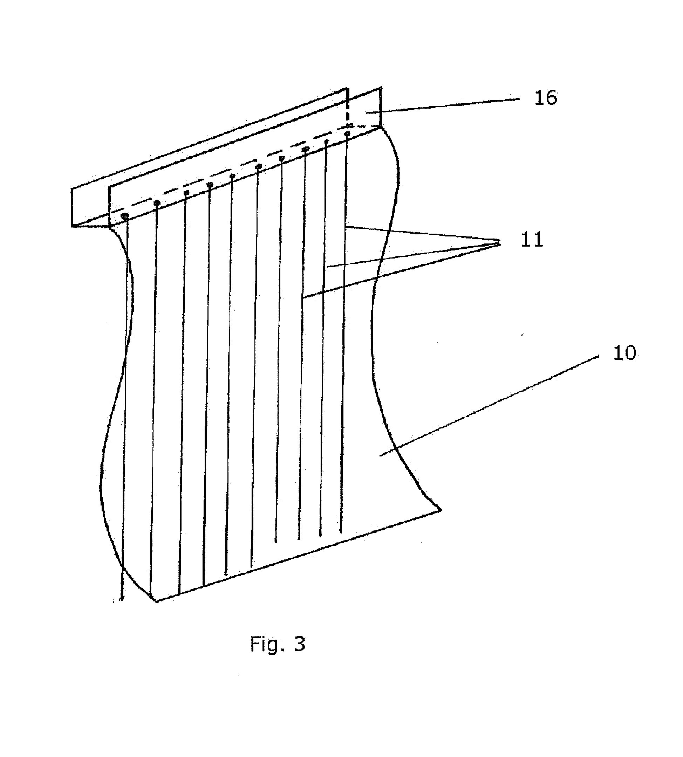

According to a particular embodiment of the invention (shown in Figure 3) the curtain 10 and counter-curtain 11 are joined to each other on a supporting structure 16 composed of a hollow section bar, having any shape and section; preferably said section bar is U-shaped.

Arranged on a part of the outer surface of said section bar there are means which allow the upper edge of the curtain 10 to adhere to the section bar, in a removable way (i.e. a strip of VELCRO® ).

Housed inside the section bar are a bundle of optical fibres, the relative LEDs and an optional transformer required to supply the LEDs, which will be connected to the electrical power source by means of common electrical cables. The optical fibres, which form the counter-curtain 11, project from the section bar 16 through appropriate holes produced in the surface thereof and arranged, preferably, at the same distance from one another, being thus arranged parallel to the curtain 10.

If deemed necessary, to obtain a greater intensity of light, the LEDs can be replaced by an illuminator towards which the ends of all the optical fibres will be conveyed.

As is immediately understood, the open structure of the section bar (such as the U-shape or the like) allows the optical fibres, and any other devices required, to be arranged with the utmost ease; once fibres and devices have been installed, if preferred, the section bar can be closed to prevent dust, dampness or other substances which may damage the fibres from accumulating once installed.

Naturally, if the aforesaid devices (in particular transformer and illuminator) are too large to be housed inside the section bar, they can be arranged on the outside thereof.

According to a further particular embodiment of the invention, the curtain 10 and the counter-curtain 11 are joined to each other by means of a tape of fabric 12 to which fastening means are applied (on both sides) to respectively allow closing of the tape to form a tubular element and fastening of said tubular element both to the curtain on the one side and to the curtain rail on the other.

Housed inside the tubular element thus formed are: a bundle of optical fibres, the relative LEDs and the optional transformer required to supply the LEDs with the mains current; alternatively, the transformer can be arranged outside the tubular element. The LEDS, or the optional transformer, are then connected through an electrical cable to the electrical power socket.

Besides the mains power supply, if preferred, the fibres can be illuminated utilising other electric power sources (i.e. batteries) if necessary arranged inside the tubular element formed by the tape 12 or on the outside thereof.

The tape also has a series of holes 14 arranged along a line parallel to the longer edges of the tape, preferably in the centre thereof.

Preferably, said holes 14 will be the same in number as the number of optical fibres forming the bundle contained in the tubular tape 12 and one optical fibre will project from each hole.

The counter-curtain 11 is therefore composed of the optical fibres spaced from one another according to the distance of the holes 14 and capable of adhering, thanks to the fastening means arranged on the tape 12, on the one side to the curtain 10 and on the other to the curtain rail supporting the drape.

The fabric of which the tape 12 is composed can be of any fabric, natural or synthetic, relatively resistant for the purposes desired, such as: cotton, polyester, fireproof polyester; according to the invention, polyester is particularly preferred.

The fastening means are conventional hooking means which can allow fastening of the edges of the tape 12 to each other, to create the desired tubular structure and, as stated hereinbefore, fastening of the tape 12 on the one side to the curtain and on the other to the curtain rail supporting the entire drape, such as buttons, multi-pocket tape with relative curtain hooks, adhesive tapes, etc.; if desired, said fastening can be implemented simply by stitching.

According to a preferred embodiment of the invention, the fastening means are composed of 4 strips of VELCRO© 13 arranged along the longer sides of the tape of fabric 12 (respectively two on the side of the tape forming the inside of the tubing and two on the side which forms the outside, the latter two not represented in the figure), the two inner strips being arranged along the edges of the tape 12 (see Figure 1) and two outer sides so that they are arranged parallel along the opposite sides of the tubular element formed by joining said two inner hems.

As can easily be understood, the two inner strips 13, engaging with each other, form the tubular structure to contain the optical fibres as described above while the other two can engage with two analogous strips of VELCRO© arranged respectively on the curtain rail and along the upper edge of the curtain 10.

The holes 14 are produced simply by cutting the tape and, if necessary, the edges thereof can be reinforced, for example with a ring, to limit wear.

According to a preferred version of the invention, a multi-pocket tape 15 is arranged along one of the strips 13 which are joined to form the tubular structure (and inferiorly thereto) to thread the optical fibres therethrough in order to hold them in a more stable and orderly position.

Said multi-pocket tape 15 is fastened to the tape 12 by means of common fastening means suitable for this purpose, if necessary glued or stitched.

The curtain 10 can be a conventional curtain made of fabric of any type (preferably at least partially transparent), and the upper edge thereof will be provided with fastening means capable of engaging with fastening means present on the tubular tape, such as a strip of VELCRO© .

According to a particular embodiment of the invention said curtain 10 is a string curtain.

The fibres forming the counter-curtain 11 according to the invention are optical fibres either of the synthetic or glass type, of variable diameter; optical fibres made of synthetic material are preferred.

The production of the tape according to the invention and the methods of applying the fastening means and the multi-pocket tape 15 thereto are well known in the art.

According to a particularly preferred production process, tape 12, holes 14 and multi-pocket tape 15 are obtained directly and simultaneously by loom weaving and the fastening means (in particular the strips of VELCRO© as described above) are then applied to the tape thus obtained with known methods and means.

Mounting of the curtain/counter-curtain assembly according to the invention is extremely simple, it being in fact sufficient to make the upper edge of the curtain 11 adhere to one side of the tape 12, already arranged in the tubular shape thereof and containing the optical fibres projecting from the respective holes 14, and then the other side of the tape 12 adhere to the curtain rail supporting the drape utilising said fastening means.

Once connected to the power supply source, the optical fibres are illuminated to create a particularly pleasing effect.

## Claims

1. Drape comprising a curtain and a counter-curtain composed of optical fibres arranged spaced along the surface of the curtain.

2. Drape as claimed in claim 1, wherein said curtain and counter-curtain are fastened to each other in a removable way.

3. Drape as claimed in claim 2, wherein the curtain (10) and the counter-curtain (11) are joined to each other on a supporting structure (16) composed of a hollow section bar, having any shape and section; preferably said section bar is U-shaped.

4. Drape as claimed in claim 3, wherein arranged on a part of the outer surface of said section bar (16) is a means which allows the upper edge of the curtain (10) to adhere to the section bar, in a removable way, while housed inside the section bar are: a bundle of optical fibres, the relative LEDs and the optional transformer required to supply the LEDs, connected to the electrical power source by means of common electrical cables, and wherein the optical fibres, which form the counter-curtain (11), project from the section bar (16) through specific holes produced in the surface thereof and arranged, preferably, at the same distance from one another, being thus arranged parallel to the curtain (10).

5. Drape as claimed in claim 2, wherein the curtain (10) and the counter-curtain (11) are joined by means of a tape of fabric (12) to which fastening means are applied (on both sides) to respectively allow closing of the tape to form a tubular element and fastening of said tubular element both to the curtain on the one side and to the curtain rail on the other, and wherein said tape has a series of holes (14) spaced from one another and arranged along a line parallel to the longer edges of said tape (12).

6. Drape as claimed in claim 5, wherein contained inside the tubular tape thus formed are: the bundle of optical fibres, the LEDs, the optional transformer and/or any batteries required for operation of the LEDs,

7. Drape as claimed in claim 6, wherein said holes (14) are the same in number as the number of optical fibres forming the bundle of optical fibres so that one optical fibre will project from each hole.

8. Drape as claimed in claims 1 - 7, wherein said tape (12) is composed of any fabric, natural or synthetic, relatively resistant for the purposes desired.

9. Drape as claimed in claim 8, wherein said tape is made of polyester.

10. Drape as claimed in claims 1 - 8, wherein said fastening means are composed of 4 strips of VELCRO© (13) arranged along the longer sides of the tape of fabric (12), two on one side and two on the opposite side, so that two of said strips can engage with each other forming a tubular structure while the other two can engage with two analogous strips of VELCRO© arranged respectively on the curtain rail and along the upper edge of the curtain (10).

11. Drape as claimed in claims 7-10, wherein said holes (14) are produced simply by cutting the tape and the respective edges are reinforced to limit wear.

12. Drape as claimed in claims 1-11, wherein a multi-pocket tape (15) is arranged along the inner side of one of the two strips of VELCRO© (13) which join to form the tubular structure.

13. Drape as claimed in claim 12, wherein said multi-pocket tape (15) is fastened to the tape (12) by means of common fastening means suitable for this purpose, if necessary glued or stitched.

14. Drape as claimed in claims 1-13, wherein said curtain (10) is made of fabric of any type, at least partially transparent, and the upper edge thereof is provided with fastening means capable of engaging with the fastening means present on the outside of the tubular tape (12).

15. Drape as claimed in claim 14, wherein said fastening means are composed of a strip of VELCRO© .

16. Drape as claimed in claims 1-15, wherein said curtain (10) is a string curtain.

17. Drape as claimed in claims 1-16, wherein the upper edge of the curtain (10) adheres to the tape (12), already arranged in the tubular shape thereof and containing the optical fibres projecting from the respective holes (14), and the tape (12) adheres to the curtain rail supporting the drape.

18. Tape made of fabric (12) comprising: fastening means, capable of allowing fastening of the edges of the tape (12) to each other, to create a tubular structure, and fastening of said tape (12) on one side to the curtain (10) and on the other to the curtain rail supporting the entire drape, holes (14), if necessary reinforced, arranged in a line parallel to the longer edges and a strip of multi-pocket tape (15) arranged along the inner edge of one of said fastening means.

19. Tape as claimed in claim 18, wherein said fastening means are strips of VELCRO© .

20. Process for producing a tape made of fabric (12) according to claims 16 and 17 wherein said: tape (12), holes (14) and multi-pocket tape (15) are obtained directly and simultaneously by loom weaving and the strips of VELCRO© are then added to the tape thus obtained with known methods and means.

21. Drape as claimed in claims 1-17, wherein an illuminator, towards which the ends of all the optical fibres are conveyed, is used as light source in place of the LEDs.
